**Europäisches Patentamt**

**European Patent Office**

**Office européen des brevets**

(19)

(11) Veröffentlichungsnummer: **0 300 228 B1**

(12) **EUROPÄISCHE PATENTSCHRIFT**

(45) Veröffentlichungstag der Patentschrift: **11.12.91**

(51) Int. Cl.5: **G06F 13/12**

(21) Anmeldenummer: **88110205.7**

(22) Anmeldetag: **27.06.88**

(54) Verfahren und Anordnung zur Steuerung des Daten- und/oder Informationsaustausches, insbesondere in Datenverarbeitungsanlagen, zwischen an ein gemeinsames Leitungssystem angeschlossenen Einheiten.

(30) Priorität: **30.06.87 DE 3721598**

(43) Veröffentlichungstag der Anmeldung:
**25.01.89 Patentblatt 89/04**

(45) Bekanntmachung des Hinweises auf die Patenterteilung:
**11.12.91 Patentblatt 91/50**

(84) Benannte Vertragsstaaten:
**AT BE CH DE FR GB IT LI NL SE**

(56) Entgegenhaltungen:
**EP-A- 0 056 078**
**EP-A- 0 156 989**
**GB-A- 2 013 005**

(73) Patentinhaber: **Siemens Nixdorf Informations-systeme AG**
**Otto-Hahn-Ring 6**
**W-8000 München 83(DE)**

(72) Erfinder: **Backhaus, Werner**
**Aidenbachstrasse 96**
**W-8000 München 70(DE)**
Erfinder: **Dietl, Erich**
**Am Graspoint 24**
**W-8200 Rosenheim(DE)**

(74) Vertreter: **Fuchs, Franz-Josef, Dr.-Ing. et al**
**Postfach 22 13 17**
**W-8000 München 22(DE)**

## Beschreibung

Verfahren und Anordnung zur Steuerung des Daten- und/oder Informationsaustausches, insbesondere in Datenverarbeitungsanlagen, zwischen an ein gemeinsames Leitungssystem angeschlossenen Einheiten

Die Erfindung betrifft ein Verfahren und eine Anordnung zur Steuerung des Daten- und/oder Informationsaustausches, insbesondere in Datenverarbeitungsanlagen, zwischen an ein gemeinsames Leitungssystem angeschlossenen Einheiten entsprechend dem Oberbegriff des Patentanspruches 1.

Bei der Benutzung gemeinsamer Einheiten oder Übertragungswege durch mehrere Benutzer können Zugriffe zu der gemeinsamen Einheit oder der Belegung des gemeinsamen Übertragungsweges nur nacheinander nach dem "One-at-a-time"-Prinzip erfolgen. Gleichzeitig auftretende Zugriffswünsche oder -anforderungen müssen daher in eine Folge einzeln nacheinander zu behandelnder Anforderungen umgewandelt werden. Hierzu verwendet man Vorrangschaltungen oder Prioritätsnetzwerke, die das Vorliegen von Anforderungen überwachen und bei mehreren gleichzeitig auftretenden Anforderungen jeweils eine nach vorgegebenem Vorrang- oder Prioritätsschema auswählen. Diese Anforderung wird dann angenommen und zur Ausführung freigegeben. Danach wird dann die nächste Anforderung ausgewählt und so weiter.

Anforderungen auf Durchführung einer Informations- oder Datenübertragung werden dabei in einheitlicher Weise von allen Einheiten des gemeinsamen Leitungssystems an eine zentrale Steuereinheit des Leitungssystems gerichtet, die das Leitungssystem der Reihe nach für die gewünschten Übertragungen zur Verfügung stellt, beispielsweise derart, daß entsprechend der DE-A1-3048417 der jeweils anfordernden Einheit die Sendeberechtigung erteilt und eine bereitgestellte Steuerinformation mit Adressenteil an alle übrigen Einheiten des Leitungssystems übertragen wird. Anhand des Adressenteils der Steuerinformation überprüft dann jede empfangende Einheit, ob es als Partner für den Informationsaustausch gesucht wird, wobei die weitere Steuerinformation Aufschluß darüber gibt, ob Daten empfangen oder abgerufen werden sollen.

Statt der Auswertung der Steuerinformation durch alle Einheiten des Leitungssystems kann diese Auswertung zunächst allein von der zentralen Steuereinheit vorgenommen werden, die dann anhand des Adressenteils die als Partner gewünschte Einheit für den Empfang der Steuerinformation gezielt frei gibt und so die Verbindungsherstellung steuert.

Unabhängig von der Art der Steuerung der Verbindungswegeherstellung ist für jede einzelne Wegedurchschaltung eine Anforderung an die zentrale Steuereinheit zu richten.

Aufgabe der Erfindung ist es, die Steuerung des Daten- und/oder Informationsaustausches über ein gemeinsames Leitungssystem insgesamt effektiver zu gestalten.

Diese Aufgabe wird hinsichtlich des Verfahrens gemäß der Erfindung durch die kennzeichnenden Merkmale des Patentanspruches 1 gelöst.

Die Erfindung nutzt dabei die Tatsache, daß zur Erledigung vorgegebener Aufgaben durch einzelne der an das gemeinsame Leitungssystem angeschlossenen Einheiten vielfach mehrere über das Leitungssystem erreichbare Einheiten in vorgegebener Weise eng zusammenarbeiten, wobei in vorgegebener Folge Verbindungswege durchgeschaltet werden müssen. Würde auch in solchen Fällen jeder erforderliche Verbindungsweg jeweils erst auf gesonderte Anforderung hin durch die zentrale Steuereinheit zugeteilt, dann würde abgesehen von dem damit verbundenen Zeitverzug wegen der notwendigen Informationsübertragung allein zum Zwecke der Wegeherstellung die Übertragungsleistung des Leitungssystems bezüglich der Nutzdaten unnötig verringert.

Die Erfindung vermeidet diese Nachteile durch Bündelung der verschiedenen Wegezuordnungen in einer einzigen und jeweils nur durch eine einzige Anforderung ausgelösten Übertragungssequenz, die entsprechend der jeweiligen Aufgabe in einem zugehörigen Ablaufschema festgelegt ist, das anhand der im Parameterwort enthaltenen Steuerinformationen von der zentralen Steuereinheit identifizierbar ist.

Dabei können zur Überbrückung von fest vorgegebenen Bereitstellungszeiten gemäß Patentanspruch 2 Übertragungsleerzyklen in den Übertragungssequenzen vorgesehen werden. Auch ist gemäß Patentanspruch 3 eine Aufteilung der Übertragungssequenzen in durch Übertragungspausen verbundene Teilsequenzen möglich, wenn von einer Einheit länger andauernde Teilaufgaben zu erledigen sind, wobei gemäß Patentanspruch 4 diese Übertragungspausen von einer nachfolgenden Übertragungssequenz genutzt werden können.

Weiterbildungen dieses Lösungsprinzips gemäß den Patentansprüchen 5 und 6 beziehen sich auf die Anwendung bei einem Ein-/Ausgabesystem zur Steuerung beispielsweise der Zugriffe von angeschlossenen Ein-/Ausgabeeinheiten zu einem gemeinsamen Speicher.

Eine Anordnung zur Durchführung der Verfahren gemäß der Erfindung ergibt sich aus Patentanspruch 7. Kernstück ist danach eine gesonderte Ablaufsteuereinrichtung, die den einzelnen Ablaufschemen entsprechende Steuerinformationen für das Wirksamschalten der Sendeschaltungen an den der Steuerung der Verbindungsherstellung dienenden Signalleitungen des Leitungssystems gespeichert enthält und diese nacheinander wirksam werden läßt. Gemäß Patentanspruch 8 können damit weitere Einrichtungen zur Unterbrechungssteuerung gekoppelt sein, während gemäß Patentanspruch 9 vorgesehene Speicher zur Zwischenspeicherung der Adressen von anfordernden Ein-/Ausgabeeinheiten bei Lesezugriffen zum Hauptspeicher die Wegeherstellung für die Zustellung der gelesenen Daten ermöglicht.

Einzelheiten der Erfindung seien nachfolgend anhand eines in der Zeichnung dargestellten Ausführungsbeispieles näher erläutert.

Im einzelnen zeigen

FIG 1

ein Blockschaltbild einer Datenverarbeitungsanlage mit an ein gemeinsames Leitungssystem angeschlossenen Ein-/Ausgabeeinheiten eines Ein-/Ausgabesystems,

FIG 2

ein Blockschaltbild zur Erläuterung der Zusammenarbeit zwischen einer Ein-/Ausgabeeinheit und der zentralen Steuereinheit des Leitungssystems,

FIG 3

eine Darstellung eines mit jeder Anforderung der Ein-/Ausgabeeinheiten an die zentrale Steuereinheit gelieferten Parameterwortes,

FIG 4 bis FIG 6

Formale Ablaufschemen in Tabellenform zur Steuerung verschiedener Übertragungssequenzen und

FIG 7 und FIG 8

Impulsdiagramme verschiedener Steuersignale des gemeinsamen Leitungssystems bei der Ausführung verschiedener Übertragungssequenzen.

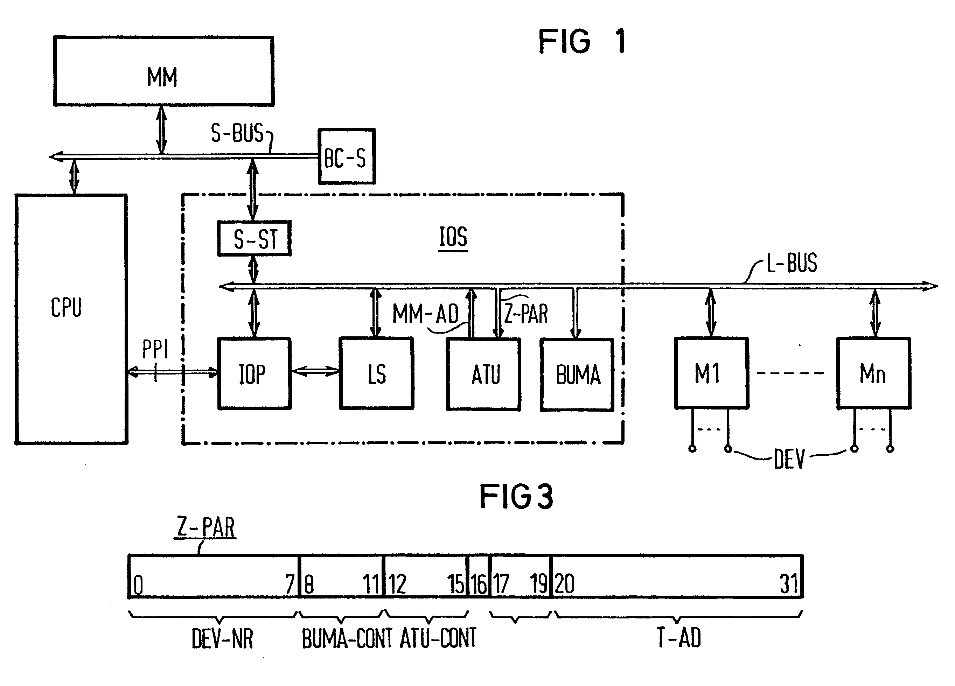

Die in FIG 1 gezeigte Datenverarbeitungsanlage besteht in herkömmlicher Weise aus einem Hauptspeicher MM mit Zugriffsteuerung, zum Beispiel einem Speicherleitungssystem S-BUS mit Zuteilungssteuerung BC-S, an die über Schnittstellensteuerungen S-ST ein Zentralprozessor CPU und ein Ein-/Ausgabesystem IOS angeschlossen ist. Letzteres besteht entsprechend der EP-A1- 0156989 zum Beispiel aus einem Ein-/Ausgabeprozessor IOP und einem Ein-/Ausgabeleitungssystem L-BUS, an das mehrere Ein-/Ausgabeeinheiten M1 bis Mn zur Ansteuerung peripherer Geräte DEV angeschlossen sind. Neben dem Ein-/Ausgabeprozessor IOP ist innerhalb des Ein-/Ausgabesystems IOS ein lokaler Speicher LS und eine Adressensetuereinheit ATU vorgesehen, die gleichfalls als selbständige Einheiten an das Ein-/Ausgabeleitungssystem L-BUS angeschlossen sind, wobei der lokale Speicher LS einen Teil der normalerweise in Übergabebereichen des Hauptspeichers MM abgelegten Steuerdaten für die einzelnen Ein-/Ausgabeaufträge gespeichert enthält und die Adressensteuereinheit ATU vom Ein-/Ausgabeprozessor IOP bereitgestellte Speicheradressen liefert, worauf aber im Zusammenhang mit der vorliegenden Erfindung nicht näher eingegangen zu werden braucht.

Das Ein-/Ausgabeleitungssystem L-BUS wird durch die zentrale Steuereinheit BUMA überwacht und gesteuert, die im vorliegenden Falle in das Ein-/Ausgabesystem IOS einbezogen ist. Außerdem hat das Leitungssystem L-BUS über die Schnittstellensteuerung S-ST und das Speicherleitungssystem S-BUS direkten Zugriff zum Hauptspeicher MM, so daß die Ein-/Ausgabeeinheiten M1 bis Mn Zugriffe zum Hauptspeicher MM mit Hilfe der Adressensteuereinheit ATU weitgehend selbständig ausführen können.

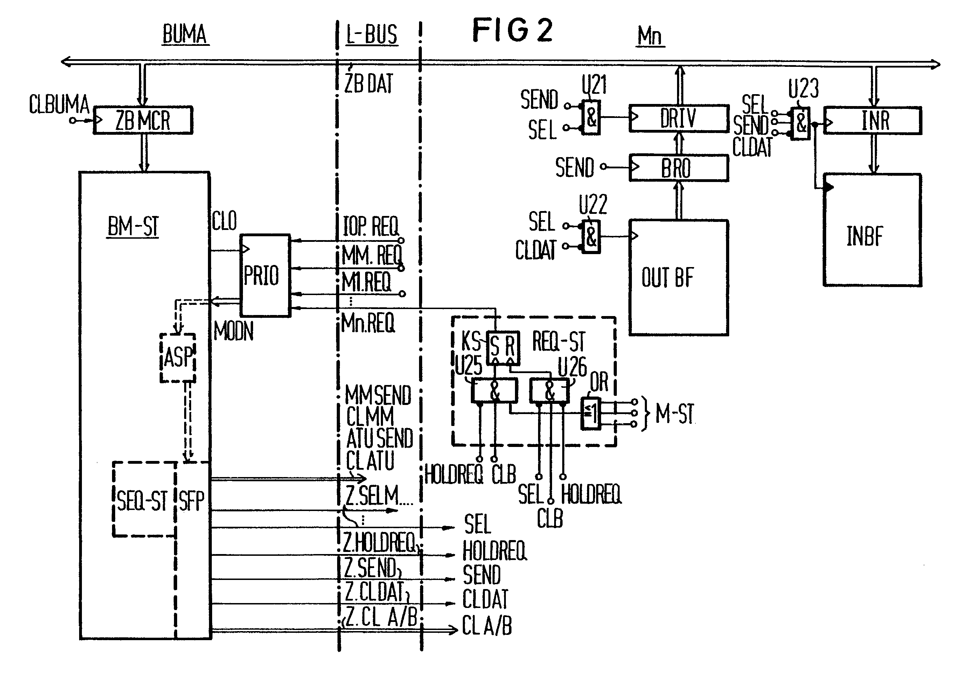

FIG 2 zeigt Teile der zentralen Steuereinheit BUMA und einer Ein-/Ausgabeeinheit Mn in schematischer Darstellung mit den notwendigen Steuer- und Datenleitungen des gemeinsamen Leitungssystems L-BUS, um Anforderungen auswählen und abwickeln zu können.

Die zentrale Steuereinheit BUMA ist zu diesem Zweck mit jeder Einheit, zum Beispiel Mn, am gemeinsamen Leitungssystem L-BUS mit einer individuellen Anforderungsleitung, zum Beispiel Mn.REQ, verbunden, die von einer Prioritätssteuereinrichtung PRIO überwacht wird Beispielsweise zu vorgegebenen Zeitpunkten, die durch das Taktsignal CLO bestimmt sind, wird die Adresse MODN der jeweils die höchste Priorität aufweisenden anfordernden Einheit ermittelt und davon abhängig, sobald das Leitungssystem L-BUS verfügbar ist, eine zugehörige individuelle Auswahlleitung als Aufforderung zum Senden eines Parameterwortes Z-PAR über die Datenleitungen ZBDAT an die zentrale Steuereinheit BUMA aktiviert. Dieses Parameterwort wird mit einem abgestimmten Taktimpuls CLBUMA in das Register ZBMCR übernommen und an die interne Steuerung BM-ST weitergeleitet. Anhand der im empfangenen Parameterwort enthaltenen Steuerinformationen wird dann die anfordernde Einheit über die zum Senden auffordernde individuelle Auswahlleitung, zum Beispiel MMSEND für den Hauptspeicher MM oder ATUSEND für die Adressensteuereinheit ATU, und die empfangende Partnereinheit mit einer individuellen Auswahlleitung zum Empfangen, zum Beispiel CLMM für den Hauptspeicher MM und CLATU für die Adressensteuereinheit ATU, angesteuert, so daß ein in der anfordernden Einheit zum Senden bereitgestelltes Daten- oder Informationswort über die Datenleitungen ZBDAT zum Empfangsregister der empfangenden Partnereinheit übertragen wird.

Sind gemäß der von der zentralen Steuereinheit BUMA mit dem Parameterwort Z-PAR empfangenen Steuerinformationen mehrere Datenwörter hintereinander zu übertragen, dann wiederholt sich die Signalgabe über die zugehörigen Signalleitungen entsprechend oft.

Für die Wirksamschaltung einer Einheit als Empfänger oder als Sender sind also normalerweise zwei getrennte individuelle Auswahlleitungen erforderlich. Dies trifft im vorliegenden Falle für die Ein-/Ausgabeeinheiten M1 bis Mn nicht zu, da diese Einheiten untereinander keine Daten austauschen. Die Auswahlsteuerung ist daher vereinfacht und benötigt für jede Ein-/Ausgabeeinheit M1 bis Mn nur eine individuelle Auswahlleitung Z.SELM... in Verbindung mit zwei gemeinsamen Steuerleitungen Z.SEND und Z.CLDAT, wobei bezogen auf die Ein-/Ausgabeeinheit Mn ein Senden mit der Signalkombination Z.SELMn ∧ Z.SEND und ein Empfang mit der Signalkombination Z.SELMn ∧ $\overline{\text{Z.SEND}}$ ∧ Z.CLDAT bewirkt wird.

Betroffen ist also jeweils nur die mit Z.SELM... ausgewählte Ein-/Ausgabeeinheit M..., wobei mit Z.SEND vom Empfangszustand in den Sendezustand umgeschaltet wird und im Empfangszustand mit Z.CLDAT jeweils ein Datenwort übernommen wird.

Entsprechend wirken in jeder Ein-/Ausgabeeinheit die Signale SEL und SEND über ein UND-Glied U21 zusammen, um die Ausgangstreiber DRIV für die Datenleitungen ZBDAT zu aktivieren, die über ein vorgeschaltetes Register BRO mit dem jeweils zu sendenden Datenwort gespeist werden. Dieses Register wird mit dem Signal SEND getaktet. Andererseits wirken die Signale SEL und CLDAT über ein UND-Glied U22 auf die Steuerschaltung beispielsweise eines Pufferspeichers OUTBF, um das jeweils nachfolgende Datenwort für die Übernahme in das Register BRO bereitzustellen, wenn mehr als ein Datenwort in Folge gesendet werden soll.

Weiterhin wird das Empfangsregister INR über ein UND-Glied U23 zur Übernahme von Datenwörtern auf den Datenleitungen ZBDAT jeweils durch das Zusammenwirken der Signale SEL, $\overline{\text{SEND}}$ und CLDAT mit einem Übernahmeimpuls beaufschlagt, wobei ein davon abgeleiteter verzögerter Impuls die Weiterleitung des im Register INR jeweils zwischengespeicherten Datenwortes, beispielsweise an einen Pufferspeicher INBF, steuert.

Als weiteres ist die in jeder Einheit vorgesehene Anforderungs-steuerung REQ-ST im Prinzip dargestellt. Anforderungssignale der internen Steuerung M-ST gelangen zusammengefaßt über ein ODER-Glied OR auf ein UND-Glied U25, über das eine Kippstufe KS gesetzt wird, die das Anforderungssignal für die zugehörige individuelle Anforderungsleitung, zum Beispiel Mn.REQ, liefert. Das Setzsignal am Ausgang des UND-Gliedes U25 wird nur in Verbindung mit einem über die Signalleitung Z.HOLDREQ wirksamen Signal HOLDREQ und mit einem über die Taktleitungen Z.CLA/B gelieferten Taktimpuls CLB ausgelöst. Zurückgesetzt wird die Kippstufe KS dagegen über das UND-Glied U26 mit dem Signal SEL nach Annahme einer Forderung in Verbindung mit dem Signal HOLDREQ und dem Taktimpuls CLB. Die Auslösung einer Anforderung und das Abschalten des Anforderungssignals ist also nur unter Kontrolle der zentralen Steuereinheit BUMA mit dem Signal HOLDREQ auf der gemeinsamen Steuerleitung Z.HOLDREQ möglich.

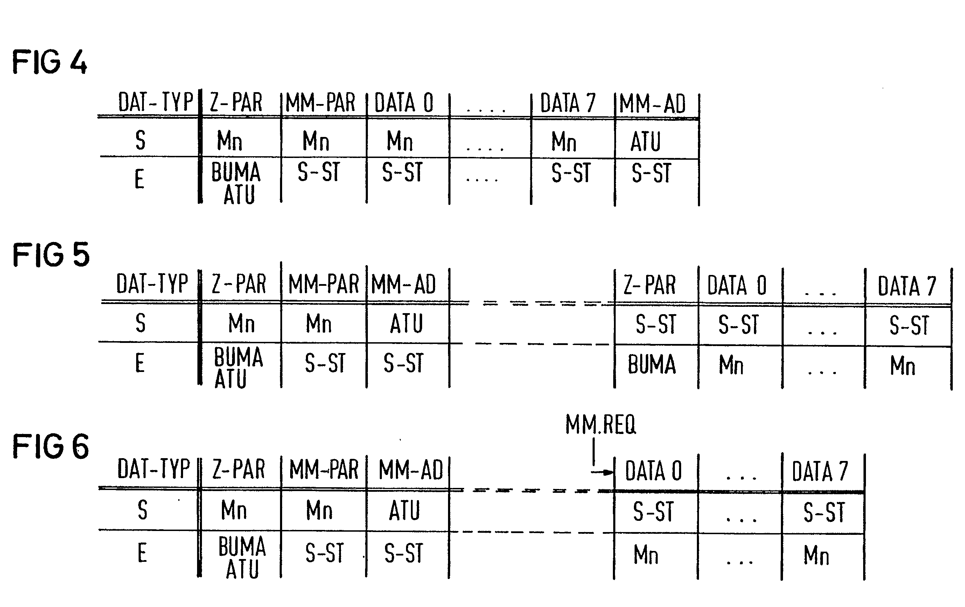

FIG 3 zeigt den Aufbau des nach Annahme einer Anforderung von einer der Ein-/Ausgabeeinheiten M1 bis Mn übertragenen Parameterwortes Z-PAR, das neben der Nummer des betroffenen peripheren Gerätes DEV, das über die anfordernde Ein-/Ausgabeeinheit, zum Beispiel Mn, die Anforderung ausgelöst hat, und weiteren hier nicht interessierenden Informationen eine Steuerinformation BUMA-CONT für die zentrale Steuereinheit BUMA des Leitungssystems L-BUS, die den weiteren Steuerungsablauf bestimmt. Diese Steuerinformationen wählen in der Ablaufsteuerung SEQ-ST die einem jeweils zugehörigen Ablaufschema entsprechenden Steuerinformationen aus, die nacheinander die Signalflipflops SFP für die Erzeugung der jeweils benötigten Steuerleitungssignale wirksam schalten.

Von den auf das gewählte Ausführungsbeispiel bezogenen einzelnen Verkehrsbeziehungen, die gemäß der Erfindung beim Durchlaufen eines Ablaufschemas zur Ausführung der zugehörigen Übertragungssequenz gegeben sind, sind in FIG 4 bis FIG 6 einige als Beispiele in Tabellenform dargestellt.

Die obere Zeile DAT-TYP bezeichnet die Art des jeweils übertragenen Datenwortes, die zweite Zeile S die jeweils als Sender arbeitenden Einheiten und die Zeile E die jeweils als Empfänger arbeitenden Einheiten von FIG 1.

FIG 4 gibt die bei einem Schreibzugriff für acht aufeinanderfolgende Datenwörter DATA0 bis DATA7 durch die Ein-/Ausgabeeinheit Mn zum Hauptspeicher MM nacheinander herzustellenden Verbindungswege an. Zunächst sendet die Einheit Mn an die zentrale Steuerung BUMA, wie bereits erläutert, das Parameterwort Z-PAR, das zusätzlich auch von der Adressensteuereinheit ATU entgegengenommen wird, damit diese prüfen kann, ob ein Speicherzugriff gefordert wird, der die Bereitstellung der zugehörigen Speicheradresse MM-AD erfordert. Danach wird der Verbindungsweg von der anfordernden Einheit Mn zur Speicherschnittstellensteuerung S-ST durchgeschaltet und nacheinander das Speicherparameterwort MM-PAR und die acht Datenwörter DATA0 bis DATA7 übertragen. Als letztes wird ein Verbindungsweg von der Adressensteuereinheit ATU zu der Speicherschnittstelle S-ST hergestellt, um die bereitgestellte Speicheradresse MM-AD zu übertragen. Innerhalb dieser Übertragungssequenz werden also mit einer einzigen Anforderung insgesamt vier verschiedene Verbindungswege gleichzeitig bzw. nacheinander hergestellt.

Analoges gilt für den Ablauf eines Lesezugriffs entsprechend der Tabelle von FIG 5, die im ersten Teil die gleichen Verkehrsbeziehungen wie die Tabelle von FIG 4 angibt, lediglich mit dem Unterschied, daß die Übertragung der Datenwörter DATA0 bis DATA7 entfällt. Danach ist die Übertragungssequenz zunächst zu Ende, damit während der unbestimmten Zeit bis zur Bereitstellung der vom Hauptspeicher MM angeforderten Datenwörter andere Übertragungssequenzen ausgeführt werden können und so das Leitungssystem besser genutzt werden kann.

Sobald die aus dem Hauptspeicher MM angeforderten Datenwörter in der Speicherschnittstelle S-ST sendebereit vorliegen, wird mit einer erneuten Anforderung an die zentrale Steuereinheit BUMA und der Übertragung des Parameterwortes Z-PAR zunächst der Aufbau des gewünschten Verbindungsweges zu der Ein-/Ausgabeeinheit veranlaßt, die die Datenwörter angefordert hat, und anschließend werden die Datenwörter dann übertragen.

Gemäß der Erfindung läßt sich auch diese gesonderte Übertragungssequenz mit der zugehörigen vorangegangenen Übertragungssequenz zu einer einheitlichen Übertragungssequenz in der Form zweier Übertragungsteilsequenzen mit dazwischenliegender Übertragungspause zusammenfassen, für die nur eine Anforderungssteuerung erforderlich ist. Dies setzt voraus, daß einerseits die Speicherschnittstelle S-ST eine Anforderung unabhängig vom Leitungssystem L-BUS stellen kann, was mit dem Hinweis MM.REQ angedeutet ist, und andererseits daß die zentrale Steuereinheit BUMA die Adresse MODN der jeweils für die Lesedaten zuständigen Ein-/Ausgabeeinheit Mn in der Reihenfolge der eingegangenen Lesezugriffe für den Hauptspeicher MM gespeichert hat, so daß darauf zurückgegriffen werden kann. In diesem Falle kann die zentrale Steuereinheit BUMA unmittelbar ausgehend von der Anforderung MM.REQ anhand der gespeicherten Einheitennummer MODN den Verbindungsweg zwischen der Speicherschnittstelle S-ST und der betroffenen Ein-/Ausgabeeinheit Mn über das Leitungssystem L-BUS herstellen, wenn dieses verfügbar ist, wobei in der Übertragungspause zwischen den beiden Übertragungsteilsequenzen gleichfalls andere Übertragungssequenzen oder -teilsequenzen abgewickelt werden können.

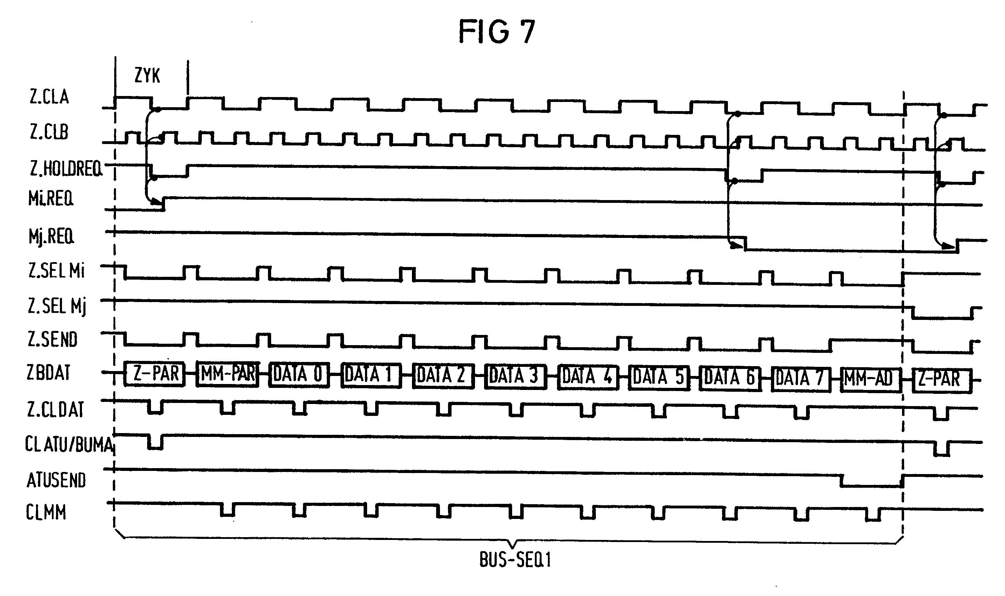

FIG 7 zeigt ein Impulsdiagramm der Steuersignale für die Durchführung einer der Tabelle von FIG 4 entsprechenden Übertragungssequenz BUS-SEQ1 für das gemeinsame Leitungssystem L-BUS, mit der ein Speicherzugriff zum Hauptspeicher MM für acht Datenwörter durch die Ein-/Ausgabeeinheit Mi abgewickelt wird.

Alle Steuersignale werden von zwei, allen Ein-/Ausgabeeinheiten über gesonderte Steuerleitungen Z.CLA/B zugeleiteten Grundtakten CLA und CLB abgeleitet, wobei die Periode des Grundtaktes CLA die einzelnen Übertragungszyklen ZYK für ein Datenwort auf den Datenleitungen ZBDAT festlegt.

In jedem Übertragungszyklus ZYK werden mit der Vorderflanke der Taktimpulse CLB in Koinzidenz mit einem Taktimpuls CLA je ein negativer Impuls SEL und SEND gebildet, der mit der Vorderflanke des jeweils nachfolgenden Taktimpulses CLA wieder beendet wird. Weiterhin wird in jedem Übertragungszyklus ein negativer Taktimpuls CLDAT ausgelöst, der mit der Rückflanke jedes Taktimpulses CLA beginnt und mit der Vorderflanke des jeweils nachfolgenden Taktimpulses CLB wieder endet.

Die Impulse SEL werden über die jeweils zuständige individuelle Auswahlleitung, zum Beispiel Z.SELMi, und die Impulse SEND und CLDAT über die gemeinsamen Signalleitungen Z.SEND bzw. Z.CLDAT in der jeweils benötigten Kombination gesendet.

Die Koinzidenz der negativen Signalimpulse SEL und SEND bestimmt dabei, wie bereits im Zusammenhang mit FIG 2 erwähnt, das Wirksamsein der einzelnen Datenwörter auf den Datenleitungen ZBDAT, während mit dem positiven Zwischenimpuls des Signals SEND die Bereitstellung des jeweils nachfolgenden Datenwortes für die Aussendung erfolgen kann, was im Vorlauf durch die Koinzidenz der negativen Signalimpulse SEL und CLDAT bereits ausgewählt ist.

Außerdem wird in der zweiten Hälfte des jeweils ersten Übertragungszyklus einer Übertragungssequenz entsprechend dem negativen Impuls der Taktimpulse CLA ein negativer Steuerimpuls HOLDREQ auf der gemeinsamen Signalleitung Z.HOLDREQ erzeugt, der in Verbindung mit der Vorderflanke des koinzidierenden Taktimpulses CLB Anforderungen an die zentrale Steuereinheit BUMA oder deren Änderungen wirksam werden läßt und andererseits die jeweils angenommene Anforderung, zum Beispiel Mi.REQ, zurücksetzt.

Die Anzahl der je Übertragungssequenz jeweils benötigten Übertragungszyklen ZYK ist von dem mit dem jeweils ersten Übertragungszyklus auf den Datenleitungen ZBDAT übertragenen Parameterwort Z-PAR abhängig, das mit einem vom Takt CLDAT abgeleiteten Steuerimpuls CLBUMA ins Register ZBMCR der zentralen Steuereinheit BUMA übernommen wird, die dann, wie bereits erläutert, anhand der im Parameterwort enthaltenen Steuerinformation den weiteren Steuerungsablauf für das gemeinsame Leitungssystem L-BUS festlegt.

Zusammen mit dem Taktimpuls CLBUMA wird jeweils auch ein Übernahmeimpuls CLATU für die Adressensteuereinheit ATU ausgelöst, so daß das Parameterwort Z-PAR auch von dieser Einheit übernommen wird.

Im vorliegenden Falle, sollen, wie bereits erwähnt, acht Datenwörter DATA0 bis DATA7 zum Hauptspeicher MM übertragen werden, denen im zweiten Übertragungszyklus der eingeleiteten Übertragungssequenz BUS-SEQ1 zunächst ein die Steuerparameter MM-PAR beinhaltendes Datenwort vorangeht. Damit diese Datenwörter MM-PAR und DATA0 bis DATA7 von der Speicherschnittstelle S-ST übernommen werden können, werden ebenfalls vom Takt CLDAT abgeleitete Übernahmeimpulse CLMM erzeugt. Die zugehörige Speicheradresse MM-AD wird schließlich als letztes Datenwort der Sequenz von der Adressensteuereinheit ATU in FIG 1 geliefert. Zu diesem Zweck wird der Ein-/Ausgabeeinheit Mi die Sendeberechtigung entzogen, indem die Steuerimpulse SEND und CLDAT im letzten Übertragungszyklus entfallen, während für die Adressensteuereinheit ATU ein gesonderter Signalimpuls ATUSEND ausgelöst wird, so daß die Speicheradresse MM-AD gesendet und mit einem zugehörigen Taktimpuls CLMM von der Speicherschnittstelle S-ST übernommen werden kann.

Handelt es sich um eine lange Übertragungssequenz, wie im vorliegenden Falle, wird gegen Ende der laufenden Übertragungssequenz BUS-SEQ1 die Anforderungsabfrage mit dem Signal HOLDREQ noch einmal wiederholt, weil sich inzwischen das bereits festgestellte Anforderungsspektrum verändert haben könnte. Im vorliegenden Falle wird mit dem wiederholten Abfrageimpuls HQLDREQ eine Anforderung der Ein-/Ausgabeeinheit Mj ermittelt, die angenommen und mit der nachfolgenden Übertragungssequenz BUS-SEQ2 bearbeitet wird.

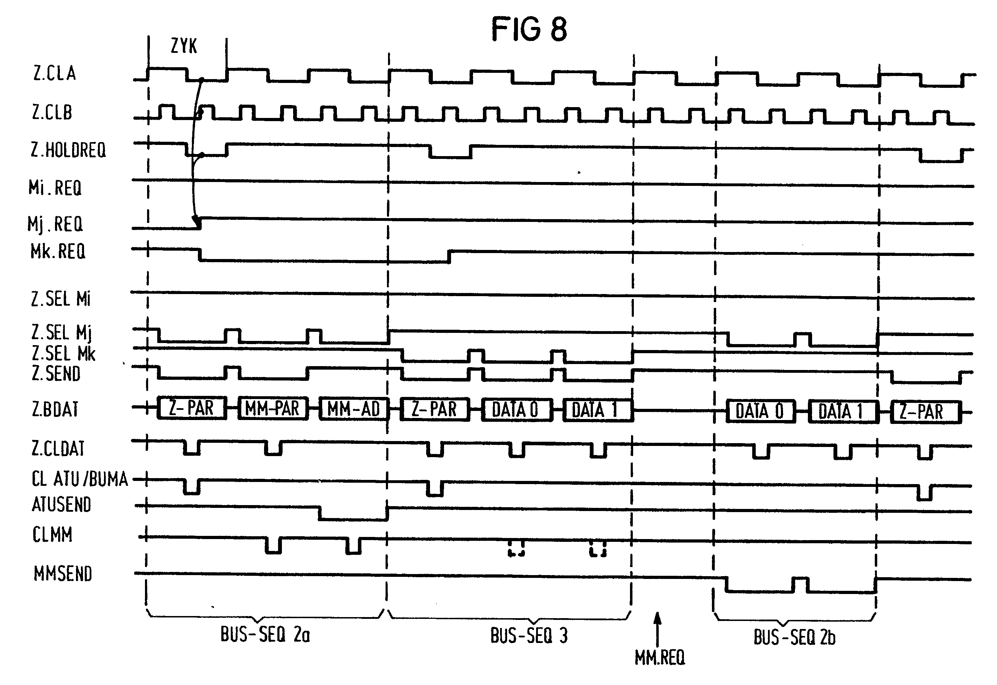

Das Impulsdiagramm von FIG 8 zeigt die Steuersignale für die durch die angenommene Anforderung der Ein-/Ausgabeeinheit Mj ausgelöste Übertragungssequenz BUS-SEQ2, die dem Ablaufschema der Tabelle von FIG 6 für einen Lesezugriff der Ein-/Ausgabeeinheit Mj zum Hauptspeicher MM entspricht. Die ersten drei Übertragungszyklen dieser Übertragungssequenz bilden eine erste Übertragungsteilsequenz BUS-SEQ2a, die die Übertragung des Parameterwortes Z-PAR an die zentrale Steuereinheit BUMA und gleichzeitig an die Adressensteuereinheit ATU im Rahmen der Anforderungssteuerung, die nachfolgende Übertragung des Speicherparameterwortes MM-PAR an die Speicherschnittstelle S-ST und daran anschließend die Übertragung der Speicheradresse MM-AD von der Adressensteuereinheit ATU an die Speicherschnittstelle S-ST umfaßt. Im Vergleich zur zuvor anhand von Flg 7 erläuterten Übertragungssequenz BUS-SEQ1 entfällt hierbei die zusätzliche Übertragung der Datenwörter DATA0 bis DATA7.

Da nicht abzusehen ist, wann der Hauptspeicher MM die angeforderten Daten an der Speicherschnittstelle S-ST bereitgestellt hat, wird die laufende Übertragungssequenz unterbrochen und eine Übertragungspause eingelegt, in der gegebenenfalls bei einer vorliegenden weiteren Anforderung eine andere Übertragungssequenz ausgeführt werden kann. Mit dem Abfragesignal HOLDREQ im ersten Übertragungszyklus der Teilsequenz BUS-SEQ2a wurde eine Anforderung der weiteren Ein-/Ausgabeeinheit Mk auf der Anforderungsleitung Mk.REQ erkannt und angenommen, die einen Schreibzugriff für zwei Datenwörter zum lokalen Speicher LS in FIG 1 wünscht. Mit Beginn der Übertragungspause am Ende der Teilsequenz BUS-SEQ2a wird daher, weil das Leitungssystem L-BUS verfügbar ist, die zugehörige Übertragungssequenz BUS-SEQ3 ausgeführt, wobei die Freigabe der Ein-/Ausgabeeinheit Mk durch die Impulse SEL auf der Auswahlleitung Z.SELMk erfolgt und die gestrichelt gezeichneten Übernahmeimpulse CLMM die Übernahmeimpulse für den lokalen Speicher LS andeuten.

Diese Übertragungssequenz BUS-SEQ3 umfaßt nur drei Übertragungszyklen ZYK, und da mit dem Abfragesignal HOLDREQ im ersten Zyklus dieser Sequenz keine neue Anforderung ermittelt wurde, ruht der Datenverkehr über das Leitungssystem L-BUS zunächst, bis eine neue Anforderung ermittelt oder, wie im vorliegenden Fall unterstellt, von der Speicherschnittstelle S-ST mit der Anforderung MM.REQ das Vorliegen der mit der Teilsequenz BUS-SEQ2a angeforderten Daten gemeldet wird. Anhand der im Speicher ASP der zentralen Steuereinheit BUMA zwischengespeicherten Nummer MODN der zuständigen Ein-/Ausgabeeinheit Mj wird daher ohne einen gesonderten Anforderungszyklus die unterbrochene Übertragungssequenz BUS-SE2 mit der Teilsequenz BUS-SEQ2b fortgesetzt, indem mit MMSEND der Speicherschnittstelle die Sendeerlaubnis erteilt und über die Auswahlleitung Z.SELMj die Ein-/Ausgabeeinheit Mj zum Empfang angesteuert wird.

Das anhand der Zeichnung beschriebene und sich auf ein Ein-/Ausgabeleitungssystem eines Ein-/Ausgabesystems IOS beziehende Ausführungsbeispiel zeichnet sich durch die Besonderheit aus, daß die Ein-/Ausgabeeinheiten M1 bis Mn untereinander keine Daten austauschen und daher für die einzelnen Einheiten keine zwei verschiedenen individuellen Auswahlleitungen zur Steuerung des Sende- und des Empfangsbetriebes wie bei den übrigen Einheiten MM, ATU, LS oder IOP am Leitungssystem L-BUS erforderlich sind.

Unabhängig davon aber dürfte deutlich geworden sein, daß das der Erfindung zugrundeliegende Lösungsprinzip, nämlich eine Bündelung mehrerer herzustellender unterschiedlicher Verbindungswege zur Steuerung des Datenaustausches zwischen mehreren an der Erledigung derselben Aufgabe in vorgegebener Weise beteiligten Einheiten innerhalb einer einzigen Übertragungssequenz für das gemeinsame Leitungssystem mit nur einer das Leitungssystem belastenden Anforderungsübertragung allgemein anwendbar ist.

## Patentansprüche

1. Verfahren zur Steuerung des Daten- und/oder Informationsaustausches, insbesondere in Datenverarbeitungsanlagen, Zwischen an ein gemeinsames Leitungssystem (L-BUS) angeschlossenen Einheiten (S-ST/MM, IOP, LS, ATU und z.B. M1), wobei eine zentrale Steuereinheit (BUMA) Anforderungen (...REQ) für eine Daten- und/oder Informationsübertragung überwacht und nach Annahme einer Anforderung gegebenenfalls die Übertragung eines Parameterwortes (Z-PAR) über das gemeinsame Leitungssystem (L-BUS) veranlaßt, anhand dessen die zentrale Steuereinheit (BUMA) den jeweils gewünschten Verbindungsweg über das gemeinsame Leitungssystem (L-BUS) für eine befehlsabhängig vorgegebene Anzahl von taktgesteuerten und zusammen mit dem Übertragungszyklus für das Parameterwort (Z-PAR) jeweils eine Übertragungssequenz bildenden Übertragungszyklen, während der jeweils ein weiteres Daten- oder Informationswort übertragen wird, herstellt,
   **dadurch gekennzeichnet,** daß bei jeder von der zentralen Steuereinheit (BUMA) angenommenen Anforderung (zum Beispiel Mj.REQ) mit nachfolgender Übertragung eines die Verbindungsherstellung durch die zentrale Steuereinheit (BUMA) steuernden Parameterwortes (Z-PAR) nicht nur ein einziger, die anfordernde Einheit mit der gewünschten Partnereinheit verbindender Übertragungsweg hergestellt wird, sondern daß abhängig von den im Parameterwort (Z-PAR) enthaltenen Steuerinformationen (BUMA-CONT) und abhängig von einem mit diesen Steuerinformationen jeweils verbundenen, vorgegebenen Ablaufschema während der jeweils eingeleiteten Übertragungssequenz gleichzeitig und/oder nacheinander verschiedene Übertragungswege zwischen an das gemeinsame Leitungssystem (L-BUS) angeschlossenen Einheiten hergestellt werden, um bei mehreren an der Erledigung einer die Anforderung auslösenden Aufgabe beteiligten Einheiten (zum Beispiel Mn, ATU und S-ST/MM) den erforderlichen Daten und/oder Informationsaustausch zwischen den jeweils beteiligten Einheiten (zum Beispiel Mn und ATU, Mn und S-ST/MM, ATU und S-ST/MM) ohne die jeweils eine neue Übertragungssequenz auslösende Anforderungssteuerung durchzuführen.

2. Verfahren nach Anspruch 1,
   **dadurch gekennzeichnet,** daß zur Überbrückung von fest vorgegebenen Bereitstellungszeiten für von einer im Rahmen einer Übertragungssequenz angesteuerten Einheit an eine andere Einheit zu liefernde Daten- oder Informationswörter innerhalb der Übertragungssequenz eine vorgegebene Anzahl von Übertragungsleerzyklen vorgesehen wird.

3. Verfahren nach Anspruch 1 oder 2,
   **dadurch gekennzeichnet,** daß die anhand des jeweils aufgerufenen Ablaufschemas vorgegebene Übertragungssequenz in durch Übertragungspausen unterbrochene Übertragungsteilsequenzen aufteilbar ist und die Einleitung der auf eine Übertragungspause folgenden Übertragungsteilsequenz von einer vorgegebenen Fortsetzungsanforderung (zum Beispiel MMREQ) abhängig ist.

4. Verfahren nach Anspruch 3,
   **dadurch gekennzeichnet,** daß während der Übertragungspause innerhalb einer Übertragungssequenz eine weitere Übertragungssequenz zur Erledigung der Anforderung einer anderen Einheit am gemeinsamen Leitungssystem (L-BUS) gestartet werden kann und daß die Fortsetzung der durch eine Übertragungspause unterbrochenen ersten Übertragungssequenz erst erfolgt, wenn die in der Übertragungspause gestartete weitere Übertragungssequenz beendet ist oder ebenfalls durch eine Übertragungspause unterbrochen wird.

5. Verfahren nach einem der Ansprüche 1 bis 4 für ein Ein-/Ausgabesystem (LOS) mit einem Ein-/Ausgabeleitungssystem (L-BUS), an das mehrere Ein-/Ausgabeeinheiten (M1 bis Mn) angeschlossen sind, die den Datentaustausch zwischen einem an das Ein-/Ausgabeleitungssystem (L-BUS) über eine Speicherschnittstelle (S-ST) angekoppelten Hauptspeicher (MM) und den mit den Ein-/Ausgabeeinheiten (M1 bis Mn) verbundenen peripheren Geräten (DEV) steuern, wobei Anforderungen (Mj.REQ) der Ein-/Ausgabeeinheiten (M1 bis Mn) an die zentrale Steuereinheit (BUMA) immer mit der nachfolgenden Übertragung eines die Verbindungsherstellung steuernden Parameterwortes (Z-PAR) an die zentrale Steuereinheit (BUMA) gekoppelt sind und wobei bei Zugriffen zum Hauptspeicher (MM) durch eine der Ein-/Ausgabeeinheiten (M1 bis Mn) die jeweilige Speicheradresse (MM-AD) von einer gesonderten Adressensteuereinheit (ATU) am Ein-/Ausgabeleitungssystem (L-BUS) direkt an die Speicherschnittstelle (S-ST) geliefert wird, **dadurch gekennzeichnet,** daß bei einer Anforderung durch eine der Ein-/Ausgabeeinheiten (M1 bis Mn) das zu übertragende Parameterwort (Z-PAR) nicht nur der zentralen Steuerung (BUMA), sondern gleichzeitig auch der Adressensteuereinheit (ATU) zugeleitet wird und daß bei einer den Zugriff zum Hauptspeicher (MM) erfordernden Anforderung (Mj.REQ) nach Übertragung des benötigten Speicherparameterwortes (MM-PAR) und gegebenenfalls der Daten für einen Schreibzugriff von der anfordernden Ein-/Ausgabeeinheit (zum Beispiel Mn) zur Speicherschnittstelle (S-ST) die zentrale Steuereinheit (BUMA) im Rahmen der eingeleiteten Übertragungssequenz unmittelbar auch einen Verbindungsweg zwischen der Adressensteuereinheit (ATU) und der Speicherschnittstelle (S-ST) zur Übertragung der Speicheradresse (MM-AD) herstellt.

6. Verfahren nach Anspruch 5, **dadurch gekennzeichnet,** daß bei Lesezugriffen der Ein-/Ausgabeeinheiten (M1 bis Mn) zum Hauptspeicher (MM) die zentrale Steuerung (BUMA) die Adresse (MODN) der den Lesezugriff anfordernden Ein-/Ausgabeeinheit (zum Beispiel Mn) nacheinander vorübergehend zwischenspeichert, daß die die Verbindung zum Hauptspeicher (MM) herstellende Speicherschnittstelle (S-ST) das Vorliegen aus dem Hauptspeicher (M) angeforderter Daten direkt und unabhängig vom Ein-/Ausgabeleitungssystem (L-BUS) der zentralen Steuereinheit (BUMA) meldet (mit MM.REQ) und daß die zentrale Steuereinheit (BUMA) aufgrund dieser Meldung (MM.REQ) und anhand der zwischengespeicherten Adresse (MODN) in Fortsetzung der unterbrochenen Übertragungssequenz den Übertragungsweg zwischen der Speicherschnittstelle (S-ST) und der jeweiligen Ein-/Ausgabeeinheit (zum Beispiel Mn) über das Ein-/Ausgabeleitungssystem (L-BUS) herstellt, sobald dieses verfügbar ist.

7. Anordnung zur Durchführung des Verfahrens zur Steuerung des Daten- und/oder Informationsaustausches nach einem der Ansprüche 1 bis 6, insbesondere in Datenverarbeitungsanlagen, zwischen an ein gemeinsames Leitungssystem (L-BUS) angeschlossenen Einheiten (S-ST/MM, IOP, LS, ATU und z.B. M1), wobei eine zentrale Steuereinheit (BUMA) Anforderungen (...REQ) für eine Daten- und/oder Informationsübertragung überwacht und nach Annahme einer Anforderung gegebenenfalls die Übertragung eines Parameterwortes (Z-PAR) über das gemeinsame Leitungssystem (L-BUS) veranlaßt, anhand dessen die zentrale Steuereinheit (BUMA) den jeweils gewünschten Verbindungsweg über das gemeinsame Leitungssystem (L-BUS) für eine befehlsabhängig vorgegebene Anzahl von taktgesteuerten und zusammen mit dem Übertragungszyklus für das Parameterwort (Z-PAR) jeweils eine Übertragungssequenz bildenden Übertragungszyklen, während der jeweils ein weiteres Daten- oder Informationswort übertragen wird, herstellt, **dadurch gekennzeichnet,** daß in der zentralen Steuerung (BUMA) mit den die Steuerinformationen (BUMA-CONT) des jeweils empfangenen Parameterwortes (Z-PAR) auswertenden Einrichtungen eine Ablaufsteuereinrichtung (SEQ-ST) gekoppelt ist, die die den einzelnen, vorgegebenen Ablaufschemen entsprechenden Steuerinformationen für die im Rahmen der jeweils zugehörigen Übertragungssequenz vorzunehmenden Verbindungsherstellungen über das Ein-/Ausgabeleitungssystem (L-BUS) gespeichert enthält und die anhand der Steuerinformationen des jeweils aufgerufenen Ablaufschemas die Sendeschaltungen (SFP) für die die Verbindungsherstellung steuernden Signalleitungen (zum Beispiel Z.SELj, Z.HOLDREQ, Z.SEND, Z.CLDAT) des gemeinsamen Leitungssystems (L-BUS) wirksam schaltet.

8. Anordnung nach Anspruch 7, **dadurch gekennzeichnet,** daß die Ablaufsteuereinrichtung (SEQ-ST) Einrichtungen zur Auswertung von eine vorübergehende Unterbrechung einer gestarteten Übertragungssequenz bedingenden Steuerinformationen des Ablaufschemas und damit gekoppelte Einrichtungen zur Fortführung einer unterbrochenen Übertragungssequenz abhängig von einer vorgegebenen Fortsetzungsanforderung (zum Beispiel MMREQ) aufweist.

9. Anordnung nach Anspruch 8 zur Durchführung des Verfahrens nach Anspruch 6, **dadurch gekennzeichnet,** daß die zentrale Steuereinheit (BUMA) Speicher (ASP) zur Zwischenspeicherung der Adressen von einen Lesezugriff zum Hauptspeicher (MM) auslösenden Ein-/Ausgabeeinheiten (zum Beispiel Mn) und Einrichtungen zur Steuerung der Verbin-

dungsherstellung zwischen der Speicher-schnittstelle (S-ST) und der die Lesedaten jeweils empfangenden Ein-/Ausgabeeinheit (zum Beispiel Mn) anhand der jeweils ältesten zwischengespeicherten Adresse aufweist.

## Claims

1. Method for controlling data and/or information exchange, preferably in data processing systems, between units (S-ST/MM, IOP, LS, ATU and e.g. M1) connected to a common bus system (L-BUS), in which a central control unit (BUMA) monitors requests (...REQ) for a data and/or information transmission and possibly initiates after acceptance of a request the transmission of a parameter word (Z-PAR) via the common bus system (L-BUS), with reference to which the central control unit (BUMA) produces the respectively desired connection path via the common bus system (L-BUS) for a number, predetermined in an instruction-dependent manner, of clock-controlled transmission cycles which form, together with the transmission cycle for the parameter word (Z-PAR), in each case one transmission sequence, during which cycles in each case a further data or information word is transmitted, characterised in that at each request (for example Mj.REQ) accepted by the central control unit (BUMA) with subsequent transmission of a parameter word (Z-PAR) which controls the production of connections by the central control unit (BUMA), not only is a single transmission path connecting the requesting unit to the desired partner unit produced but, depending on the control information (BUMA-CONT) contained in the parameter word (Z-PAR) and depending upon a predetermined process diagram associated in each case with this control information, during the respectively initiated transmission sequence, different transmission paths are produced simultaneously and/or successively between units connected to the common bus system (L-BUS), in order to carry out, in the case of a plurality of units (for example Mn, ATU and S-ST/MM) involved in the execution of a task triggering the request, the required data and/or information exchange between the respectively involved units (for example Mn and ATU, Mn and S-ST/MM, ATU and S-ST/MM) without the request control which triggers in each case a new transmission sequence.

2. Method according to Claim 1, characterised in that a predetermined number of transmission no-load cycles is provided within the transmission sequence for the purpose of bridging strictly predetermined loading times for data words or information words to be supplied by a unit, which is driven within the scope of a transmission sequence, to another unit.

3. Method according to Claim 1 or 2, characterised in that the transmission sequence predetermined by means of the process diagram respectively called up can be divided into transmission subsequences interrupted by transmission pauses and the initiation of the transmission subsequence following a transmission pause is dependent on a predetermined continuation request (for example MMREQ).

4. Method according to Claim 3, characterised in that during the transmission pause within a transmission sequence a further transmission sequence can be started to execute the request of another unit on the common bus system (L-BUS), and in that the continuation of the first transmission sequence interrupted by a transmission pause does not occur until the further transmission sequence started in the transmission pause is terminated or is likewise interrupted by a transmission pause.

5. Method according to one of Claims 1 to 4, for an input/output system (IOS) having an input/output bus system (L-BUS), to which a plurality of input/output units (M1 to Mn) are connected which control the data exchange between a main memory (MM) connected to the input/output bus system (L-BUS) via a memory interface (S-ST) and the peripheral devices (DEV) connected to the input/output units (M1 to Mn), requests (Mj.REQ) of the input/output units (M1 to Mn) to the central control unit (BUMA) always being connected to the central control unit (BUMA) with the subsequent transmission of a parameter word (Z-PAR) which controls the production of connections, and, when one of the input/output units (M1 to Mn) accesses the main memory (MM), the respective memory address (MM-AD) being supplied directly to the memory interface (S-ST) from a separate address control unit (ATU) on the input/output bus system (L-BUS), characterised in that, in the event of a request by one of the input/output units (M1 to Mn), the parameter word (Z-PAR) to be transmitted is not only fed to the central control (BUMA) but also at the same time to the address control unit (ATU), and in that, in the event of a request (Mj.REQ) requiring access to the main memory (MM), the central control unit (BUMA) also directly produces, after transmission of the required memory parameter word (MM-PAR) and possibly of the data for a write access of the requesting input/output unit (for example Mn) to the memory interface (S-ST), a connection path, within the scope of the initiated transmission sequence, between the address control unit (ATU) and the memory interface (S-ST) for transmitting the memory address (MM-AD).

6. Method according to Claim 5, characterised in that in the case of read accesses of the input/output units (M1 to Mn) to the main memory (MM), the central control (BUMA) temporarily successively buffers the address (MODN) of the input/output unit (for example Mn) requesting the read access, in that the memory interface (S-ST) producing the connection to the main memory (MM) reports (with MM.REQ) to the central control unit (BUMA), directly and independently of the input/output bus system (L-BUS), the presence of data requested from the main memory (M), and in that the central control unit (BUMA) produces, on the basis of this report (MM.REQ) and with reference to the buffered address (MODN) as a continuation of the interrupted transmission sequence, the transmission path between the memory interface (S-ST) and the respective input/output unit (for example Mn) via the input/output bus system (L-BUS), as soon as the latter is available.

7. Arrangement for carrying out the method for controlling the data and/or information exchange according to one of Claims 1 to 6, preferably in data processing systems, between units (S-ST/MM, IOP, LS, ATU and e.g. M1) connected to a common bus system (L-BUS), in which a central control unit (BUMA) monitors requests (...REQ) for a data and/or information transmission and possibly initiates after acceptance of a request the transmission of a parameter word (Z-PAR) via the common bus system (L-BUS), with reference to which the central control unit (BUMA) produces the respectively desired connection path via the common bus system (L-BUS) for a number, predetermined in an instruction-dependent manner, of clock-controlled transmission cycles which form, together with the transmission cycle for the parameter word (Z-PAR), in each case one transmission sequence, during which cycles in each case a further data or information word is transmitted, characterised in that, in the central control (BUMA) an executive sequencing device (SEQ-ST) is connected to the devices which evaluate the control information (BUMA-CONT) of the respectively received parameter word (Z-PAR), which executive sequencing device (SEQ-ST) contains stored in it the control information, corresponding to the individual, predetermined process diagrams, for the connections to be produced via the input/output line system (L-BUS) within the scope of the respectively associated transmission sequence, and which, with reference to the control information of the respectively called-up process diagram, activates the transmitting circuits (SFP) for the signalling lines (for example Z.SELj, Z.HOLDREQ, Z.SEND, Z.CLDAT), which control the production of connections, of the common bus system (L-BUS).

8. Arrangement according to Claim 7, characterised in that the executive sequencing device (SEQ-ST) has devices for evaluating control information of the process diagram, which information brings about a temporary interruption of a transmission sequence which has been started, and thus connected devices for continuing an interrupted transmission sequence dependent on a prescribed continuation request (for example MMREQ).

9. Arrangement according to Claim 8, for carrying out the method according to Claim 6, characterised in that the central control unit (BUMA) has memories (ASP) for buffering the addresses of input/output units (for example Mn) which trigger a read access to the main memory (MM), and devices for controlling the production of connections between the memory interface (S-ST) and the input/output unit (for example Mn), which respectively receives the read data, with reference to the respective oldest buffered address.

**Revendications**

1. Procédé pour commander l'échange de données et/ou d'informations, notamment dans des installations de traitement de données, entre des unités (S-ST/MM, IOP, LS, ATU et par exemple M1), raccordées à un système commun de lignes (L-BUS), et selon lequel une unité de commande centrale (BUMA) contrôle des demandes (...REQ) pour une transmission de données et/ou d'informations et, après la réception d'une demande, déclenche éventuellement la transmission, par l'intermédiaire du système commun de bus (L-BUS), d'un mot de paramètre (Z-PAR), sur la base duquel l'unité de commande centrale (BUMA) établit le trajet respectif désiré de liaison par l'intermédiaire du système commun de lignes (L-BUS) pour un nombre, prédéterminé en fonction d'instructions, de cycles de transmission commandés de façon cadencée et formant, conjointement avec le cycle de transmission pour le mot de paramètre (Z-PAR), respectivement une séquence de transmission, pendant laquelle respectivement un autre mot de données ou d'informations est transmis,
caractérisé par le fait que, lors de chaque demande (par exemple Mj.REQ) reçue par l'unité de commande centrale (BUMA), avec transmission ultérieure d'un mot de paramètre (Z-PAR) commandant l'établissement de la liaison par l'intermédiaire de l'unité de commande centrale (BUMA), non seulement un trajet unique de transmission reliant l'unité demandeuse à l'unité correspondante désirée, est établi mais, en fonction des informations de commande (BUMA-CONT) contenues dans le mot de paramètre (Z-PAR) et en fonction d'un schéma d'exécution prédéterminé, lié respectivement à ces informations de commande, différents trajets de transmission sont établis simultanément et/ou successivement, pendant la séquence de transmission respectivement déclenchée, entre des unités raccordées au système commun de lignes (L-BUS), pour exécuter, dans le cas de plusieurs unités (par exemple Mn, ATU et S-ST/MM) participant à l'exécution d'une tâche déclenchant la demande, l'échange nécessaire de données et/ou d'informations entre les unités respectives participantes (par exemple Mn et ATU, Mn et S-ST/MM, ATU et S-ST/MM) sans la commande de demande déclenchant respectivement une nouvelle séquence de transmission.

2. Procédé suivant la revendication 1, caractérisé par le fait que pour supprimer des temps de préparation, prédéterminés de façon fixe, pour des mots de données ou d'informations devant être envoyés par une unité, commandée dans le cadre d'une séquence de transmission à une autre unité, il est prévu, à l'intérieur de la séquence de transmission, un nombre prédéterminé de cycles vides de transmission.

3. Procédé suivant la revendication 1 ou 2, caractérisé par le fait que la séquence de transmission prédéterminée sur la base du système respectivement appelé d'exécution, peut être subdivisée en séquences partielles de transmission interrompues par des pauses de transmission, et que le déclenchement de la séquence partielle de transmission, qui succède à une pause de transmission, dépend d'une demande prédéterminée de poursuite (par exemple MMREQ).

4. Procédé suivant la revendication 3, caractérisé par le fait que, pendant la pause de transmission à l'intérieur d'une séquence de transmission, une autre séquence de transmission peut être déclenchée pour satisfaire à l'exigence d'une autre unité dans le système commun de lignes (L-BUS) et que la poursuite de la première séquence de transmission interrompue par une pause de transmission intervient uniquement lorsque l'autre séquence de transmission, qui a démarré pendant la pause de transmission, est terminée ou est également interrompue par une pause de transmission.

5. Procédé suivant l'une des revendications 1 à 4 pour un système d'entrée/sortie (IOS) comportant un système d'entrée/sortie (L-BUS), auquel sont raccordées plusieurs unités d'entrée/sortie (M1 à Mn), qui commandent l'échange de données entre une mémoire principale (MM), accouplée au système de lignes d'entrée/sortie (L-BUS) par l'intermédiaire d'une interface de mémoire (S-ST), et les appareils périphériques (DEV) raccordés aux unités d'entrée/sortie (M1 à Mn), et selon lequel les demandes (Mj.REQ) des unités d'entrée/sortie (M1 à Mn) sont envoyées à l'unité de commande centrale (BUMA) toujours avec la transmission ultérieure d'un mot de paramètre (Z-PAR), qui commande l'établissement de la liaison, et, dans le cas d'accès à la mémoire principale (MM) par l'une des unités d'entrée/sortie (M1 à Mn), l'adresse respective de mémoire (MM-AD) est envoyée directement à l'interface de mémoire (S-ST) par l'unité particulière de commande d'adresses (ATU) raccordée au système de lignes d'entrée/sortie (L-BUS),
caractérisé par le fait que dans le cas d'une demande faite par l'une des unités d'entrée/sortie (M1 à Mn), le mot de paramètre (Z-PAR) devant être transmis est envoyé non seulement à l'unité de commande centrale (BUMA), mais également simultanément à l'unité de commande d'adresses (ATU), et que dans le cas d'une demande (Mj.REQ) demandant l'accès à la mémoire principale (MM), après la transmission du mot de paramètre de mémoire nécessaire (MM-PAR) et éventuellement des données pour un accès d'enregistrement par l'unité d'entrée/sortie demandeuse (par exemple Mn), à l'interface de mémoire (S-ST), l'unité de commande centrale (BUMA) établit également directement, dans le cadre de la séquence de transmission déclenchée, une voie de liaison entre l'unité de commande d'adresses (ATU) et l'interface de mémoire (S-ST) pour la transmission de l'adresse de mémoire (MM-AD).

6. Procédé suivant la revendication 5, caractérisé par le fait que dans le cas d'accès de lecture des unités d'entrée/sortie (M1 à Mn) à la mémoire principale (MM), l'unité de commande centrale (BUMA) mémorise temporairement, de façon successive, l'adresse (MODN) de l'unité d'entrée/sortie (par exemple Mn) demandant l'accès de lecture, que l'interface de mémoire (S-ST), qui établit la liaison avec la mémoire principale (MM), signale (avec MM.REQ) directement et indépendamment du système de lignes d'entrée/sortie (L-BUS), à l'unité de commande centrale (BUM), la présence de données demandées à la mémoire principale (M), et que sur la base de cette signalisation (MM.REQ) et sur la base de l'adresse (MODN) mémorisée temporairement, l'unité de commande centrale (BUMA) établit, lors de la poursuite de la séquence interrompue de transmission, le trajet de transmission entre l'interface de mémoire (S-ST) et l'unité respective d'entrée (par exemple Mn) par l'intermédiaire du système de lignes d'entrée/sortie (L-BUS), dès que ce système est disponible.

7. Dispositif pour la mise en oeuvre du procédé pour la commande de l'échange de données et/ou d'informations suivant l'une des revendications 1 à 6, notamment dans des installations de traitement de données, entre des unités (S-ST/MM, IOP, LS, ATU et par exemple M1), raccordées à un système commun de lignes (L-BUS), et selon lequel une unité de commande centrale (BUMA) contrôle des demandes (...REQ) pour une transmission de données et/ou d'informations et, après la réception d'une demande, déclenche éventuellement la transmission, par l'intermédiaire du système commun de bus (L-BUS), d'un mot de paramètre (Z-PAR), sur la base duquel l'unité de commande centrale (BUMA) établit le trajet respectif désiré de liaison par l'intermédiaire du système commun de lignes (L-BUS) pour un nombre, prédéterminé en fonction d'instructions, de cycles de transmission commandés de façon cadencée et formant, conjointement avec le cycle de transmission pour le mot de paramètre (Z-PAR), respectivement une séquence de transmission, pendant laquelle respectivement un autre mot de données ou d'informations est transmis, caractérisé par le fait que dans l'unité de commande centrale (BUMA), aux dispositifs évaluant les informations de commande (BUMA-CONT) du mot de paramètre (Z-PAR) respectivement reçu, est accouplé un dispositif de commande d'exécution (SEQ-ST), dans lequel sont mémorisées les informations de commande qui correspondent aux différents systèmes d'exécution prédéterminés, pour les établissements de liaisons devant être exécutés dans le cadre de la séquence respectivement associée de transmission, par l'intermédiaire du système de lignes d'entrée/sortie (L-BUS), et qui, sur la base des informations de commande du système d'exécution respectivement appelé, active les circuits d'émission (SFP) pour les lignes de transmission de signaux (par exemple Z.SELj, Z.HOLDREQ, Z.SEND, Z.CLDAT), qui commandent l'établissement des liaisons, du système commun de lignes (L-BUS).

8. Dispositif suivant la revendication 7, caractérisé par le fait que le dispositif de commande d'exécution (SEQ-ST) contient des dispositifs servant à évaluer des informations de commande du schéma d'exécution, qui conditionnent une interruption transitoire d'une séquence de transmission déclenchée, et des dispositifs, accouplés aux précédents, pour la poursuite d'une séquence interrompue d'interruption en fonction d'une demande prédéterminée de continuation (par exemple MMREQ).

9. Dispositif suivant la revendication 8 pour la mise en oeuvre du procédé suivant la revendication 6, caractérisé par le fait que l'unité de commande centrale (BUMA) contient des mémoires (ASP) servant à mémoriser temporairement les adresses d'unités d'entrée/sortie (par exemple Mn) déclenchant un accès de lecture à la mémoire principale (MM), et des dispositifs servant à commander l'établissement des liaisons entre l'interface de mémoire (S-ST) et l'unité d'entrée/sortie (par exemple Mn), qui reçoit respectivement les données de lecture, sur la base de l'adresse mémorisée temporairement, qui est respectivement la plus ancienne.

# FIG 1

## FIG 3

EP 0 300 228 B1

Z-PAR

| 0 | 7 | 8 | 11 | 12 | 15 | 16 | 17 | 19 | 20 | 31 |
|---|---|---|---|---|---|---|---|---|---|---|

DEV-NR     BUMA-CONT   ATU-CONT        T-AD

FIG 2

## FIG 4

| DAT-TYP | Z-PAR | MM-PAR | DATA 0 | . . . . | DATA 7 | MM-AD |
|---------|-------|--------|--------|---------|--------|-------|
| S | Mn | Mn | Mn | . . . . | Mn | ATU |
| E | BUMA ATU | S-ST | S-ST | . . . . | S-ST | S-ST |

## FIG 5

| DAT-TYP | Z-PAR | MM-PAR | MM-AD | | Z-PAR | DATA 0 | . . . | DATA 7 |
|---------|-------|--------|-------|---|-------|--------|-------|--------|
| S | Mn | Mn | ATU | | S-ST | S-ST | . . . | S-ST |
| E | BUMA ATU | S-ST | S-ST | | BUMA | Mn | . . . | Mn |

## FIG 6

MM.REQ

| DAT-TYP | Z-PAR | MM-PAR | MM-AD | | DATA 0 | . . . | DATA 7 |
|---------|-------|--------|-------|---|--------|-------|--------|
| S | Mn | Mn | ATU | | S-ST | . . . | S-ST |
| E | BUMA ATU | S-ST | S-ST | | Mn | . . . | Mn |

EP 0 300 228 B1

## FIG 7

| | ZYK |
|---|---|

Z.CLA

Z.CLB

Z.HOLDREQ

Mi.REQ

Mj.REQ

Z.SEL Mi

Z.SEL Mj

Z.SEND

ZBDAT: | Z-PAR | MM-PAR | DATA 0 | DATA 1 | DATA 2 | DATA 3 | DATA 4 | DATA 5 | DATA 6 | DATA 7 | MM-AD | Z-PAR |

Z.CLDAT

CLATU/BUMA

ATUSEND

CLMM

BUS-SEQ.1

EP 0 300 228 B1

FIG 8